# EUROPÄISCHE PATENTSCHRIFT

(11) **EP 0 750 130 B1**
(45) Veröffentlichungstag und Bekanntmachung des Hinweises auf die Patenterteilung: **11.08.1999**
(21) Anmeldenummer: 96109846.4
(22) Anmeldetag: 19.06.1996
(51) Int. Cl.: F16D 65/00, F16D 65/092, F16D 69/02

(54) **Bremsbacken und Verfahren zu seiner Herstellung**
Brake pad and method of manufacturing
Patin de frein et procédé de fabrication

(30) Priorität: 23.06.1995 DE 19522889
(43) Veröffentlichungstag der Anmeldung: 27.12.1996
(73) Patentinhaber: CWW-GERKO Akustik GmbH & Co. KG, 60388 Frankfurt (DE)
(72) Erfinder: Bildner, Karlheinz, Dipl.-Ing., 63589 Linsengericht-Grossenhausen (DE); Freist, Christoph, Dr. Ing., 33613 Bielefeld (DE)
(74) Vertreter: Schlagwein, Udo, Dipl.-Ing.

(56) Entgegenhaltungen:
- EP-A- 0 604 090
- EP-A- 0 619 354
- DE-A- 3 402 866
- FR-A- 2 273 980
- GB-A- 2 020 763
- US-A- 5 099 962

## Beschreibung

Die Erfindung geht aus von einem Bremsbacken, welcher eine Trägerplatte hat, die aus zwei durch eine Dämpfschicht miteinander verbundenen Trägerplattenblechen besteht und bei der ein Trägerplattenblech mit Reibbelag versehen ist. Weiterhin betrifft die Erfindung zwei Verfahren zur Herstellung eines solchen Bremsbackens.

Ein Bremsbacken der vorstehenden Art ist Gegenstand der DE-C-28 21 194. Gemäß diesem Patent besteht die Dämpfschicht aus einem nicht steigfähigen Material. Als Beispiel hierfür wird cyclisiertes Gummi mit einer Schichtdicke von 150 µm oder gummimodifiziertes Asbest einer Schichtdicke von 0,5 mm genannt. Auch synthetisches Latex oder eine gummimodifizierte Epoxydharz-Folie sollen sich gemäß dem Patent als Dämpfschicht eignen. Zum Herstellen eines Bremsbackens wird ein Trägerplattenblech auf einer Seite und die andere Trägerplatte auf beiden Seiten mit einem Kleber versehen. Dann legt man das erste Trägerplattenblech in eine Preßform und bringt auf seiner Klebeschicht die Dämpfschicht auf. Anschließend wird das zweite Trägerplattenblech auf die Dämpfschicht gelegt und Reibbelagsmasse eingefüllt. Beim nachfolgenden Pressen werden gleichzeitig die Reibbelagmasse mit einem Trägerplattenblech und die Trägerplattenbleche miteinander über die Dämpfschicht verbunden.

Da beim Preßvorgang die Dämpfschicht durch den dabei erforderlichen Druck und die Wärme nicht zu den Seiten hin wegfließen darf, ist man bei der Auswahl der Materialien für die Dämpfschicht sehr eingeschränkt. In der Praxis hat sich gezeigt, daß auch die Bremsbacken nach dem genannten Patent 28 21 194 beim Bremsen zum Quietschen neigen, da die Dämpfwirkung nicht voll befriedigt. Es liegt natürlich nahe, zur Verbesserung der Dämpfeigenschaften die Dämpfschicht dicker auszubilden. Das ist jedoch in der Praxis nicht möglich, weil sie dann während des Verpressens in der Preßform zur Seite der Trägerplattenbleche hin wegfließt.

Der Erfindung liegt das Problem zugrunde, einen Bremsbacken der eingangs genannten Art so auszubilden, daß er eine möglichst gute Dämpfwirkung hat, jedoch kostengünstig hergestellt werden kann. Weiterhin sollen Verfahren zur Herstellung eines solchen Bremsbackens entwickelt werden.

Das erstgenannte Problem wird erfindungsgemäß dadurch gelöst, daß die Dämpfschicht ausschließlich aus einem hoch vernetzten Kunststoffkleber mit einer Schichtstärke von etwa 20 µm bis 200 µm, vorzugsweise 75 µm bis 100 µm, besteht.

Überraschenderweise hat ein solcher Bremsbacken trotz seiner dünneren Dämpfschicht eine ganz wesentlich bessere Dämpfwirkung als die bekannte Bremsbacke und auch als ebenfalls gebräuchliche Bremsbacken, bei denen zwischen der Trägerplatte und dem gegen sie anliegenden, die Bremskraft erzeugenden Kolben ein dünnes Dämpfungsblech gelegt wird. Die Herstellung des erfindungsgemäßen Bremsbackens ist sehr einfach, weil zwischen den Trägerplattenblechen nur noch auf einem Trägerplattenblech der hoch vernetzte Kleber und nicht mehr auf beiden Trägerplattenblechen Kleber und dazwischen das Dämpfmaterial aufgebracht werden muß. Da die Dämpfschicht des erfindungsgemäßen Bremsbackens wesentlich dünner sein kann als die gemäß der DE-C-28 21 194, besteht beim Verpressen des Reibmaterials eine geringere Gefahr des Wegfließens.

Hiervon abgesehen, ist die Dämpfschicht aufgrund ihres geringeren Materialbedarfs infolge der geringeren Schichtdicke kostengünstiger zu erzeugen. Hinzu kommt, daß die dünne Dämpfschicht die beim Bremsen auftretenden Scherkräfte besser übertragen kann als eine dicke Dämpfschicht, so daß sich die Trägerplattenbleche nicht gegenseitig so weit verschieben, daß in ihnen vorgesehene, ineinandergreifende Eindrückungen Scherkräfte übertragen müssen und es dadurch zu einem Quietschen kommt.

Besonders hohe Dämpfwerte mit einer Spitze bei Temperaturen von etwa 30° C ergeben sich, wenn die Dämpfschicht ein peroxidisch vernetztes Polyacrylat einer Schichtstärke von etwa 75 µm ist.

Nicht ganz so hohe, jedoch über einen größeren Temperaturbereich als bei Polyacrylat reichende, gute Dämpfwerte mit einer Spitze bei im Dauereinsatz von Scheibenbremsen auftretenden Temperaturen von etwa 50 °C ergeben sich, wenn gemäß einer anderen Weiterbildung der Erfindung die Dämpfschicht ein peroxidisch vernetzter Silikonkleber einer Schichtstärke von etwa 100 µm ist.

Die zweitgenannte Aufgabe, nämlich die Schaffung eines Verfahrens zur Herstellung eines Bremsbackens, welcher eine Trägerplatte hat, die aus zumindest zwei unter Zwischenfügung einer Dämpfschicht miteinander verbundenen Trägerplattenblechen besteht und bei der in einer Preßform Reibbelag auf eine Klebeschicht eines Trägerplattenbleches aufgepreßt wird, läßt sich erfindungsgemäß dadurch lösen, daß in einem ersten Arbeitsgang auf einem Trägerplattenblech als Dämpfschicht ausschließlich ein hoch vernetzter Kleber aufgebracht und dann zur Bildung einer Trägerplatte ein zweites Trägerplattenblech auf den Kleber aufgepreßt wird und diese Trägerplatte anschliessend in einer Preßform mit dem Reibbelag auf einem Trägerplattenblech versehen wird.

Dieses Verfahren ist sehr kostengünstig auszuführen, da zwischen den Trägerplattenblechen nur noch der Kleber auf einem Trägerplattenblech und nicht mehr auf beiden Trägerplattenblechen Kleber und zusätzlich die Dämpfmasse aufgebracht werden muß. Durch das erfindungsgemäße Verfahren entsteht ein Bremsbacken, der eine ganz besonders hohe Dämpfwirkung hat und deshalb nicht zum Quietschen neigt. Da das Verpressen der beiden Trägerplattenbleche mit dem Dämpfmaterial in einem vom Aufpressen des Reibmaterials unabhängigen Arbeitsgang erfolgt, kann man hierbei den hierzu optimalen Preßdruck ohne Rücksicht auf den für das Aufpressen des Reibmaterials richtigen Preßdruck wählen.

Ein anderes, erfindungsgemäßes Verfahren zur Herstellung der Bremsbacken besteht darin, daß in einem ersten Arbeitsgang auf einem Blech als Dämpfschicht ausschließlich ein hoch vernetzter Kleber aufgebracht und dann ein zweites Blech auf den Kleber aufgepreßt wird und daß danach aus den durch den Kleber miteinander verbundenen Blechen einzelne Trägerplatten ausgestanzt und diese Trägerplatte anschließend in einer Preßform mit dem Reibbelag auf einem Trägerplattenblech versehen wird.

Ein solches Verfahren erlaubt es, zunächst aus großen Blechen eine Sandwichplatte zu erzeugen, aus der dann die einzelnen Trägerplatten ausgestanzt werden. Anschließend wird in einem weiteren Arbeitsgang, der sogar in einem anderen Werk ausgeführt werden kann, das Reibmaterial mit der Trägerplatte verpreßt.

Besonders hohe Dämpfwerte ergeben sich, wenn als Kleber zum Verbinden der Bleche ein peroxidisch vernetztes Polyacrylat verwendet wird.

Optimal ist es dabei, wenn das Polyacrylat mit einer Dicke von etwa 75 µm auf das Blech aufgebracht wird.

Alternativ zum Polyacrylat kann man gemäß einer anderen Weiterbildung des Verfahren auch als Kleber zum Verbinden der Bleche einen peroxidisch vernetzten Silikonkleber verwenden. Dieser hat bei etwa 50 °C seine maximale Dämpfung.

Die Schichtdicke ist bei Silikonkleber bei etwa 100 µm für das Dämpfungsverhalten optimal.

Die Erfindung läßt verschiedene Ausführungsformen zu. Eine davon ist in der Zeichnung dargestellt und wird nachfolgend beschrieben. Diese zeigt in
- Fig.1: eine perspektivische Darstellung einen findungsgemäßen Bremsbacken,
- Fig.2: einen Schnitt durch den Bremsbacken entlang der Linie II - II.

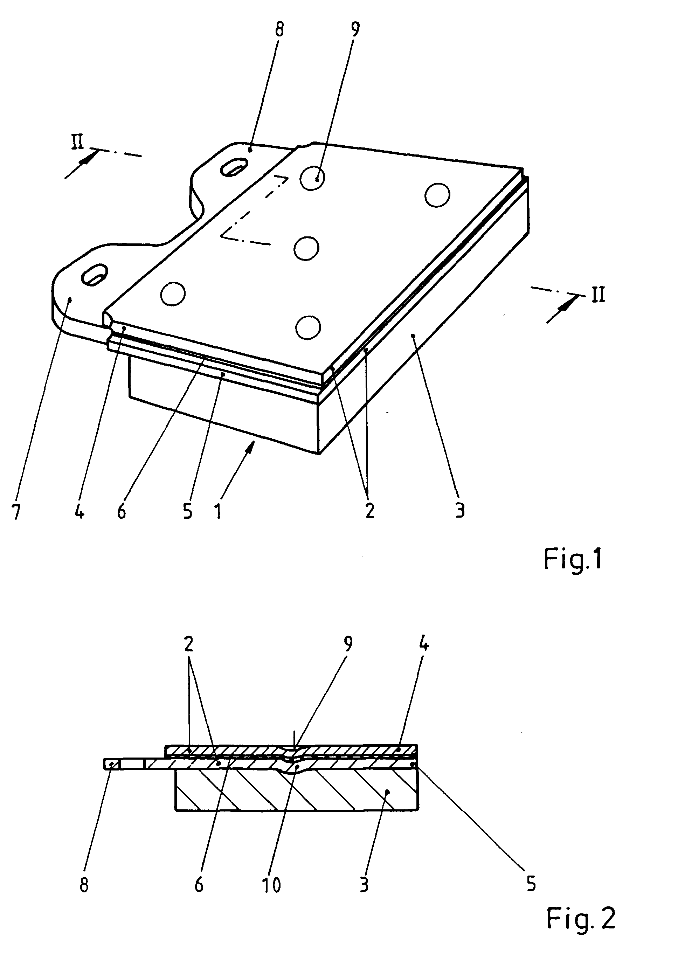

Die Figur 1 zeigt als Ganzes einen Bremsbacken 1, bei dem auf übliche Weise eine Trägerplatte 2 Bremsbelag 3 trägt. Die Trägerplatte 2 besteht aus zwei Trägerplattenblechen 4, 5, welche durch eine dünne Dämpfschicht 6 miteinander verbunden sind. Wie bei Bremsbacken üblich, hat auch der erfindungsgemäße Bremsbacken 1 an einer Seite zwei Augen 7, 8, welche der Befestigung des Bremsbackens 1 in einem nicht gezeigten Bremsgehäuse dienen.

Im in Figur 1 gesehen oberen Trägerplattenblech 4 sind mehrere Eindrückungen 9 vorhanden. Die Figur 2 läßt erkennen, daß diese Eindrückungen 9 in entsprechende Eindrückungen 10 des unteren Trägerplattenbleches 5 reichen und dadurch die Trägerplattenbleche 4, 5 vor einem gegenseitigen Verschieben sichern. Die Eindrückungen 9 haben bei diesem Ausführungsbeispiel kugelkalottenförmige Gestalt. Sie könnten jedoch auch anders, beispielsweise trapezförmig oder rechteckig geformt sein. Entscheidend ist nur, daß sie die Dämpfschicht 6 von Scherkräften entlasten.

Wichtig für die Erfindung ist die Beschaffenheit der Dämpfschicht 6. Bei ihr handelt es sich entweder um ein peroxidisch vernetztes Polyacrylat einer Schichtstärke von etwa 75 µm oder um einen peroxidisch vernetzten Silikonkleber einer Schichtstärke von etwa 100 µm.

Zur Herstellung des Bremsbackens 1 wickelt man von einem Coil Blech ab und bringt beispielsweise durch Rakeln die die Dämpfschicht 6 bildende Dämpfmasse auf. Dann legt man ein von einem anderen Coil abgewickeltes Blech auf das erste Blech und preßt die beiden Bleche mit der Dämpfschicht 6 zusammen, so daß ein Sandwich aus den beiden Blechen und der Dämpfschicht 6 entsteht. Aus diesem Sandwich stanzt man anschließend eine größere Anzahl von Trägerplatten 2 aus, welche später in einer Preßform an einer Seite mit dem den Bremsbelag bildenden Reibmaterial verpreßt werden.

### Bezugszeichenliste

- 1: Bremsbacke
- 2: Trägerplatte
- 3: Bremsbelag
- 4: Trägerplattenblech
- 5: Trägerplattenblech

- 6: Dämpfschicht
- 7: Auge
- 8: Auge
- 9: Eindrückung
- 10: Eindrückung

## Patentansprüche

1. Bremsbacken, welcher eine Trägerplatte hat, die aus zwei durch eine Dämpfschicht miteinander verbundenen Trägerplattenblechen besteht und bei der ein Trägerplattenblech mit Reibbelag versehen ist, **dadurch gekennzeichnet**, daß die Dämpfschicht (6) ausschließlich aus einem hoch vernetzten Kunststoffkleber mit einer Schichtstärke von etwa 20 µm bis 200 µm, vorzugsweise 75 µm bis 100 pm, besteht.

2. Bremsbacken nach Anspruch 1, **dadurch gekennzeichnet**, daß die Dämpfschicht (6) ein peroxidisch vernetztes Polyacrylat einer Schichtstärke von etwa 75 µm ist.

3. Bremsbacken nach Anspruch 1, **dadurch gekennzeichnet**, daß die Dämpfschicht (6) ein peroxidisch vernetzter Silikonkleber einer Schichtstärke von etwa 100 µm ist.

4. Verfahren zur Herstellung eines Bremsbackens, welcher eine Trägerplatte hat, die aus zumindest zwei unter Zwischenfügung einer Dämpfschicht miteinander verbundenen Trägerplattenblechen besteht und bei der in einer Preßform Reibbelag auf eine Klebeschicht eines Trägerplattenbleches aufgepreßt wird, **dadurch gekennzeichnet**, daß in einem ersten Arbeitsgang auf einem Trägerplattenblech als Dämpfschicht ausschließlich ein hoch vernetzter Kleber aufgebracht und dann zur Bildung einer Trägerplatte ein zweites Trägerplattenblech auf den Kleber aufgepreßt wird und diese Trägerplatte anschließend in einer Preßform mit dem Reibbelag auf einem Trägerplattenblech versehen wird.

5. Verfahren zur Herstellung eines Bremsbackens, welcher eine Trägerplatte hat, die aus zumindest zwei unter Zwischenfügung einer Dämpfschicht miteinander verbundenen Trägerplattenblechen besteht und bei der in einer Preßform Reibbelag auf eine Klebeschicht eines Trägerplattenbleches aufgepreßt wird, dadurch gekennzeichnet, daß in einem ersten Arbeitsgang auf einem Blech als Dämpfschicht ausschließlich ein hoch vernetzter Kleber aufgebracht und dann ein zweites Blech auf den Kleber aufgepreßt wird und daß danach aus den durch den Kleber miteinander verbundenen Blechen einzelne Trägerplatten ausgestanzt und diese Trägerplatte anschließend in einer Preßform mit dem Reibbelag auf einem Trägerplattenblech versehen wird.

6. Verfahren nach den Ansprüchen 4 oder 5, **dadurch gekennzeichnet**, daß als Kleber zum Verbinden der Bleche ein peroxidisch vernetztes Polyacrylat verwendet wird.

7. Verfahren nach Anspruch 6, **dadurch gekennzeichnet**, daß das Polyacrylat mit einer Dicke von etwa 75 µm auf das Blech aufgebracht wird.

8. Verfahren nach den Ansprüchen 4 oder 5, **dadurch gekennzeichnet**, daß als Kleber zum Verbinden der Bleche ein peroxidisch vernetzter Silikonkleber verwendet wird.

9. Verfahren nach Anspruch 7, **dadurch gekennzeichnet**, daß der Silikonkleber mit einer Dicke von etwa 100 µm auf das Blech aufgebracht wird.

## Claims

1. Brake shoe with a backplate which consists of two plates joined together by a damping layer and in which one plate of the backplate is provided with a friction lining, characterized in that the damping layer (6) consists entirely of a highly cross-linked plastic adhesive with a film thickness of the order of 20 µm to 200 µm, preferably 75 µm to 100 µm.

2. Brake shoe according to Claim 1, characterized in that the damping layer (6) is a peroxide-cured polyacrylate with a film thickness of the order of 75 µm.

3. Brake shoe according to Claim 1, characterized in that the damping layer (6) is a peroxide-cured silicone adhesive with a film thickness of the order of 100 µm.

4. Method for the manufacture of a brake shoe with a backplate which consists of at least two plates joined together with interposition of a damping layer and in which a friction lining is pressed on to an adhesive coating of one plate of the backplate in a press mould, characterized in that, in a first operation, only a highly cross-linked adhesive is applied as a damping layer on one plate of the backplate, and a second plate is then pressed on to the adhesive to form the backplate, and one plate of this backplate is then provided with the friction lining in a press mould.

5. Method for the manufacture of a brake shoe with a backplate which consists of at least two plates joined together with interposition of a damping layer and in which a friction lining is pressed on to an adhesive coating of one plate of the backplate in a press mould, characterized in that, in a first operation, only a highly cross-linked adhesive is applied as a damping layer on one plate and a second plate is then pressed on to the adhesive and individual backplates are then stamped out of the plates which have been joined together by the adhesive and this backplate is then provided on a plate with the friction lining in a press mould.

6. Method according to Claim 4 or Claim 5, characterized in that a peroxide-cured polyacrylate is used as the adhesive for joining the plates.

7. Method according to Claim 6, characterized in that the polyacrylate is applied to the plate with a thickness of the order of 75 µm.

8. Method according to Claim 4 or Claim 5, characterized in that a peroxide-cured silicone adhesive is used as the adhesive for joining the plates.

9. Method according to Claim 7, characterized in that the silicone adhesive is applied to the plate with a thickness of the order of 100 µm.

## Revendications

1. Plaquette de frein qui comprend une plaque support qui est composée de deux tôles de plaque support assemblées l'une à l'autre par une couche d'amortissement et dans laquelle une des tôles de la plaque support est munie d'une garniture de friction, caractérisée en ce que la couche d'amortissement (6) est exclusivement composée d'une colle faite d'une résine synthétique fortement réticulée, ayant une épaisseur de couche d'environ 20 µm à 200 µm, de préférence de 75 µm à 100 µm.

2. Plaquette de frein selon la revendication 1, caractérisée en ce que la couche d'amortissement (6) est un polyacrylate réticulé par peroxyde, d'une épaisseur de couche d'environ 75 µm.

3. Plaquette de frein selon la revendication 1, caractérisée en ce que la couche d'amortissement (6) est une colle au silicone réticulée par peroxyde d'une épaisseur de couche d'environ 100 µm.

4. Procédé de fabrication d'une plaquette de frein qui comprend une plaque support qui est composée d'au moins deux tôles de plaque support assemblées l'une à l'autre avec interposition d'une couche d'amortissement et où une garniture de friction est pressée sur une couche de colle d'une tôle de la plaque support dans un moule, caractérisé en ce que, dans une première phase de travail, on dépose sur une tôle de la plaque support, en tant que couche d'amortissement, exclusivement une colle fortement réticulée, puis, pour la formation d'une plaque support, on presse une deuxième tôle de plaque support sur la colle et, ensuite, dans un moule, on munit cette plaque support de la garniture de friction sur une tôle de la plaque support.

5. Procédé de fabrication d'une plaquette de frein qui comprend une plaque support qui est composée d'au moins deux tôles de plaque support assemblées l'une à l'autre avec interposition d'une couche d'amortissement et où une garniture de friction est pressée sur une couche de colle d'une tôle de la plaque support dans un moule, caractérisé en ce que, dans une première phase de travail, on dépose sur une tôle, en tant que couche d'amortissement, exclusivement une colle fortement réticulée, puis on presse une deuxième tôle sur la colle et, en ce qu'après cela, on découpe des plaques supports individuelles dans les tôles assemblées l'une à l'autre par la colle et, ensuite, dans un moule, on munit cette plaque support d'une garniture de friction sur une tôle de la plaque support.

6. Procédé selon les revendications 4 ou 5, caractérisé en ce qu'on utilise comme colle pour assembler les tôles un polyacrylate réticulé par peroxyde.

7. Procédé selon la revendication 6, caractérisé en ce que le polyacrylate est déposé sur la tôle en une épaisseur d'environ 75 µm.

8. Procédé selon les revendications 4 ou 5, caractérisé en ce qu'on utilise comme colle pour assembler les tôles une colle au silicone réticulée par peroxyde.

9. Procédé selon la revendication 7, caractérisé en ce que la colle au silicone est déposée sur la tôle en une épaisseur d'environ 100 µm.
